# EUROPEAN PATENT SPECIFICATION

(11) **EP 2 173 572 B1**
(45) Date of publication and mention of the grant of the patent: **17.04.2013**
(21) Application number: 07796043.3
(22) Date of filing: 13.06.2007
(51) Int. Cl.: B60C 5/00, B60C 5/10, B60C 5/12, B60C 15/02

(54) **PNEUMATIC SEALING RING HAVING AN INNER TUBE AND EXPANDABLE LINER FOR A TUBE-TYPE TIRE**
DRUCKLUFTDICHTUNGSRING MIT EINEM SCHLAUCH UND EINER DEHNBAREN INNENSEELE FÜR EINEN SCHLAUCHREIFEN
JOINT D'ÉTANCHÉITÉ PNEUMATIQUE AYANT UNE CHAMBRE À AIR INTERNE ET REVÊTEMENT EXPANSIBLE POUR UN PNEU DE TYPE À CHAMBRE À AIR

(43) Date of publication of application: 14.04.2010
(73) Proprietor: Douglas, Jeffrey P., Anaheim, CA 92808 (US)
(72) Inventor: Douglas, Jeffrey P., Anaheim, CA 92808 (US)
(74) Representative: Carstens, Dirk Wilhelm
(86) International application number: PCT/US2007/013843
(87) International publication number: WO 2008/153522

(56) References cited:
- DE-A1- 3 601 318
- GB-A- 1 365 907
- GB-A- 1 453 727
- GB-A- 1 571 916
- GB-A- 2 024 737
- GB-A- 2 024 737
- US-A1- 2005 167 023

## Description

### BACKGROUND OF THE INVENTION

### 1. Technical Field

This invention relates to pneumatic sealing ring including an inner tube and an expandable liner extending in surrounding engagement thereover to be used with a tube-type tire and rim so that the tube-type tire will operate without a conventional inner tube and as if it were tubeless.

### 2. Background Art

A conventional tube-type tire is commonly known to have an inner tube associated therewith. A primary disadvantage of such a tube-type tire is that the rubber material of the inner tube is subject to pinching during use. Such a pinch may result in a tear and, ultimately, a pinch flat, whereby to place the tire out of service or in need of repair. The tools that are commonly used when a new tube-type tire is installed can also cause a pinch in the inner tube and the resulting damage to the tire.

In this same regard, the inner tube associated with the conventional tube-type tire is characteristically large, bulky and correspondingly heavy. These characteristics are not well suited for achieving the high performance that is required by racing vehicles on which such a tube-type tire may be used. In fact, such conventional tube-type tires can contribute to significant poundage when mounted on a wheel which is likely to reduce speed and increase energy (e.g., fuel) consumption.

Attention is drawn to EP-A-695 651, which discloses a tire mounted on a rim of a wheel. Said tire including a main tire section extending circumferentially around the rim of the wheel. Further an annular structure is disclosed comprising two layers made of elastomeric material reinforced with textile fibres. This annular structure is in contact with the tire and with a ribbon provided on the rim.

GB 1 453 727 A discloses a device for applying the beads of a pneumatic tire against a wheel rim which has seatings for the beads, rim flanges and a well-base. Said device comprises an inflatable annular spreader tube having a reinforced radially outer wall which is circumferentially inextensible but may be compressed in the transverse direction to assume a transversely undulated form. The part of the spreader tube radially inwardly of said reinforced wall being constituted by a flexible wall which is intended to press against the tire beads and against the well-base of the rim when the spreader tube is inflated, whereby in the uninflated condition of the spreader tube the radially outer and flexible walls can touch each other and the spreader tube can be compressed in the transverse direction so that the walls each assume transversely undulating form.

GB 2 024 737 A discloses an inflatable interior support structure for a pneumatic tire. The support structure comprises an inflatable extensible elastomeric primary inner tube disposed against the wheel rim. A plurality of internally threaded bushings is spaced circumferentially around the radially outer surface of the inner tube. A relatively inextensible flexible inner tire having beads surrounding the primary inner tube and is inflatable so that the beads bear against the beads of the pneumatic tire. A secondary inner tube is divided into radial compartments and fills the space between the inner tire and the pneumatic tire and each compartment has an air inlet duct radially aligned with the bushing.

Therefore, what is desirable is a tube-type tire that can be used by high performance (e.g., racing) vehicles but has the characteristics of a tubeless tire so as to avoid the shortcomings that have heretofor been associated with conventional tube-type tires.
In accordance with the present invention a tyre and rim assembly as set forth in claim 1 is provided. Preferred embodiments of the invention are disclosed in the dependent claims.

In general terms, a pneumatic sealing ring is disclosed for use with a tube-type tire and rim so that the tube-type tire will operate without a conventional inner tube and as if it were tubeless. The pneumatic sealing ring is adapted to create an efficient seal within a main tire section of the tire. In this regard, the rim includes a generally flat shelf which lies between an upwardly turned vertical lip and a downwardly turned arcuate beadwell. The main tire section has a relatively large volume air chamber at the interior thereof. The pneumatic sealing ring includes a thin inner tube having a relatively small volume air chamber, whereby the inner tube is incapable of providing run flat support. The air chamber of the inner tube of the sealing ring is inflated to a pressure that is at least twice the pressure to which the air chamber of the main tire section is inflated to ensure a proper sealing effect of the pneumatic sealing ring against the inside of the main tire section.

The main tire section is seated upon the shelf of the rim, and the inner tube of the pneumatic sealing ring is seated upon the beadwell of the rim such that the air chamber of the main tire section is isolated from the rim. The sealing ring also includes an outer liner that is disposed in surrounding engagement over the inner tube. The liner is manufactured from a resilient material that is adapted to expand in response to the air chamber of the inner tube being inflated. Flexible casing cords run around the liner to provide structural reinforcement when the liner is expanded. The outer liner of the pneumatic sealing ring is moved into sealing engagement with the main tire section of the tire as the air chamber of the inner tube is inflated. To this end, one or more sealing rings project outwardly from the side walls of the outer liner to form an efficient seal with the main tire section and force the main tire section against the vertical lip of the rim. A centering lip projects downwardly from each side wall to be seated against the beadwell of the rim and thereby enable the liner to be self-centering over and around the inner tube.

The liner of the pneumatic sealing ring is covered by an optional rigid (e.g., plastic) shield. The shield provides a protective wall that safeguards the inner tube of the sealing ring lying below the liner from sharp objects within the air chamber of the main tire section. A series of deflectors project upwardly from the shield and into the air chamber of the main tire section. The deflectors are shaped to deflect thorns, and the like, that might cause damage to the inner tube.

In accordance with an alternate embodiment of the pneumatic sealing ring, a hollow threaded rim lock bolt extends through the tire rim, past the inner tube, and through the expandable outer liner to communicate with the air chamber of the main tire section so as to establish a passage through which the air chamber is inflated. The rim lock bolt runs through a deflector that is preferably manufactured from rubber. The deflector is located between the outer liner of the sealing ring and the rim to compress a section of the inner tube and thereby permit the rim lock bolt to pass outside the inner tube and unobstructed through the sealing ring to the air chamber of the main tire section. A rim lock nut is coupled to one end of the rim lock bolt outside the rim. A rim lock plate is coupled to the opposite end of the rim lock bolt within the air chamber of the main tire section. As the rim lock nut is tightened down against the rim, the rim lock plate is correspondingly pulled into sealing engagement against the main tire section to prevent the main tire section from spinning on the rim in response to the torque that is developed by the motor of a motorcycle.

In a modification to the pneumatic sealing ring, a valve stem extends through the rim. An air port extends through the expandable outer liner to communicate with the air chamber of the main tire section. An air bypass hose is connected between the valve stem and the air port to establish a passage through which the air chamber of the main tire section is inflated. The air bypass hose runs around one side of the sealing ring so as to lie between the inner tube and the expandable liner thereof.

### BRIEF DESCRIPTION OF THE DRAWINGS

FIG. 1 shows a tube-type tire including the pneumatic sealing ring of this invention mounted on the rim of a spoke-type wheel of the kind commonly used by bicycles and motorcycles;

FIG. 2 is a cross-section taken along lines 2-2 of FIG. 1 showing the pneumatic sealing ring isolating the air chamber of a main tire section of the tire from the rim on which the sealing ring is seated;

FIG. 3 is a cross-section showing the pneumatic sealing ring of FIG. 2 with a modification including a deflector by which to enable a hollow rim lock bolt to be connected to a rim lock plate to prevent the main tire section of the tire from spinning on the rim;

FIG. 4 is a top view of the deflector and the rim lock bolt connected to the rim lock plate taken in the direction of reference arrow 4 of FIG. 3; and

FIG. 5 shows an additional modification to the pneumatic sealing ring of FIG. 2.

### DESCRIPTION OF THE PREFERRED EMBODIMENT

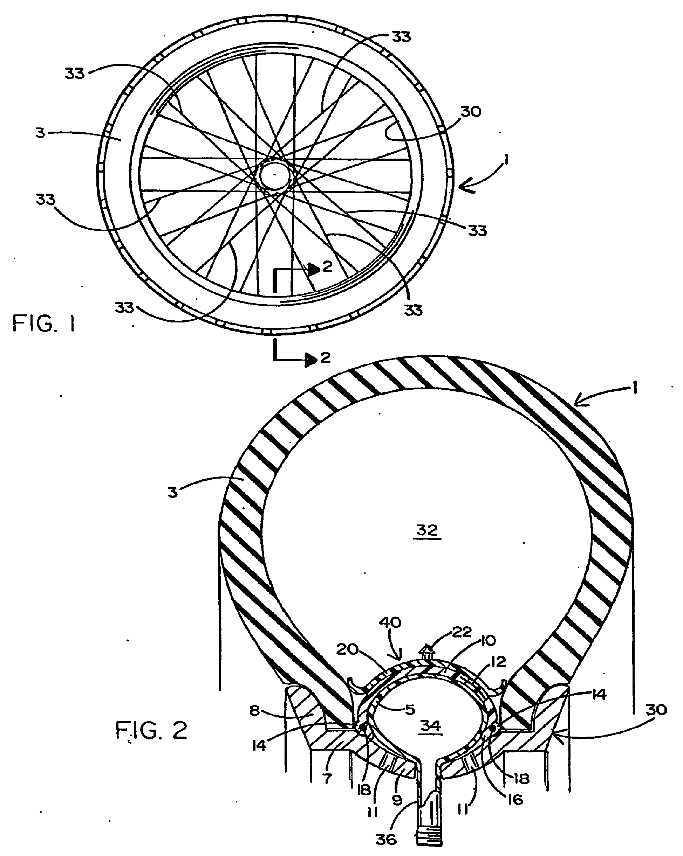

A first preferred embodiment for a pneumatic sealing ring 40 which forms the present invention for use with a tube-type tire 1 and a suitable rim 30 is described while referring to FIGs. 1 and 2 of the drawings. The tube-type tire 1 includes an outer inflatable main tire section 3. The pneumatic sealing ring 40 includes an inflatable inner tube 5 which extends circumferentially around the rim 30 inside the main tire section 3. The main tire section 3 is typically manufactured from thick rubber. The inner tube 5 of sealing ring 40 is preferably manufactured from a relatively thin (e.g., butyl) rubber material or a similar membrane. The tire 1 to which the sealing ring 40 will be mated is ideally mounted on a metal rim 30 having a generally flat shelf 7 located between an upturned vertical lip 8 and a downturned arcuate beadwell 9.

The main tire section 3 of the tube-type tire 1 is seated on the shelf 7 of the rim 30 so as to press against the vertical lip 8 thereof. The inner tube 5 of pneumatic sealing ring 40 is seated on the beadwell 9 of the rim 7. The tire 1 and its rim 30 as herein described are particularly suitable for a spoke-type wheel (best shown in FIG. 1) such as that usually required by a bicycle or a motorcycle. Accordingly, a set of spoke holes 11 are formed through the rim 30 at the beadwell 9 to receive respective spokes (designated 33 in FIG. 1). However, it is to be understood that the tire 1 can be employed on the wheel of any vehicle where a tube-type tire is desirable.

The main tire section 3 has a relatively large volume air chamber 32 at the interior thereof that is inflated with air. The inner tube 5 of pneumatic sealing ring 40 has a smaller volume air chamber 34 that is also inflated with air. As an important feature of the sealing ring 40, the inner tube 5 thereof is seated upon the rim 30 so as to isolate the air chamber 32 of main tire section 3 from the rim 30.

The pneumatic sealing ring 40 includes an outer liner 10 to lay over and around the inner tube 5 and thereby separate the inner tube 5 from the main tire section 3 and its air chamber 32. The air chamber 34 of the inner tube 5 is ideally inflated to a pressure of approximately 6.9 bar (100 psi) by way of an integral valve stem 36. The main tire section 3 includes a valve stem (not shown) through which the air chamber 32 thereof is ideally inflated with air to a lower pressure of approximately 1.03-1.38 bar (15-20 psi). While the precise pressures to which the air chambers 32 and 34 of the main tire section 3 and the inner tube 5 of the tube-type tire 1 are inflated may vary with application, the pressure to which the inner tube 5 is inflated must be at least twice the pressure to which the main tire section 3 is inflated to enable the pneumatic sealing ring 40 to generate a sufficiently strong sealing force against tire section 3 for a purpose that will soon be described.

The outer liner 10 of sealing ring 40 is preferably manufactured from a resilient (e.g., rubber) material that is adapted to expand when the air chamber 34 of the inner tube 5 is inflated. Casing cords 12 that are manufactured from an (e.g., aramid) fiber material run continuously around the liner 10 between opposing beads 18 to provide structural reinforcement and limit the expansion of the liner 10 in response to the inflation of the air chamber 34 of inner tube 5. To this end, one or more sealing O-rings 14 are molded into each of the sidewalls of the liner 10. The O-rings 14 extend outwardly from the liner 10 to be sealed against the inside of main tire section 3 when the air chamber 34 of inner tube 5 is inflated. A centering lip 16 projects downwardly from each of the opposite sidewalls of the liner 10 below the bead 18 thereof. The centering lips 16 are seated upon the beadwell 9 of rim 30 and enable the outer liner 10 to be self-centering in surrounding engagement around the inner tube 5 in order to provide a uniform sealing force against the main tire section 3.

The pneumatic sealing ring 40 also includes an optional protective shield 20 that lies overtop the outer liner 10. The shield 20 is ideally manufactured from a rigid material (e.g., plastic) and is intended to safeguard the liner 10 and the inner tube 5 lying thereunder from puncture wounds and similar damage. A series of deflectors 22 (only one of which being shown) project upwardly from the shield 20 for receipt within the air chamber 32 of the main tire section 3. The deflectors 22 are (e.g., nipple) shaped so as to be able to deflect thorns and similar sharp objects away from the inner tube 5. The deflectors 22 are ideally manufactured from rubber.

With the added benefit of the pneumatic sealing ring 40 herein disclosed, the tube-type tire 1 having a standard rim 30 will be able to operate without a conventional inner tube and as if it were a tubeless tire. That is to say, the inner tube 5 of sealing ring 40 having a small volume air chamber 34 is separated from the relatively large volume air chamber 32 of the main tire section 3 by means of the outer expandable liner 10. Therefore, the main tire section 3 and the inner tube 5 enclose separate and distinct air chambers 32 and 34 within the tire 1 so as to form a dual air chamber tire. The inner tube 5 seats against the beadwell 9 of the rim 30 and extends circumferentially around the rim 30 so as to advantageously seal off (i.e., isolate) the air chamber 32 of main tire section 3 from the rim 30 and thereby eliminate the need for a conventional inner tube on a tube-type rim.

In this regard, because the air chamber 34 of the inner tube 5 of pneumatic sealing ring 40 is inflated to a much greater pressure than the air chamber 32 of the main tire section 3 of tire 1, the inner tube will be capable of exerting a pushing or sealing force against the resilient liner 10. By virtue of its sealing O-ring 14 and centering lips 16, the outer expandable liner 10 of pneumatic sealing ring 40 will be automatically and evenly aligned between the main tire section 3 and the inner tube 5 to create an efficient seal against the inside of the main tire section 3 and thereby force the outside of the main tire section 3 against the vertical tip 8 of the rim 30 in response to an inflation of inner tube 5.

It may also be appreciated that the inner tube 5 is considerably thinner, smaller in size and lighter in weight than the thicker main tire section 3 of the tube-type tire 1. Hence, and unlike conventional tube-type tire and rim assemblies, the inner tube 5 of the pneumatic sealing ring 40 of this invention is substantially confined to the beadwell 9 of rim 30. Because of its correspondingly small size relative to commercially available pneumatic inner liners, inserts, and the like, of the kind shown, for example, in U. S. Patent Nos. 5,246,050 or 6,688,359, the resilient liner 10 herein disclosed will offer no run flat support in the event that the main tire section 3 should suffer a blowout. Moreover, because of the small size of my inner tube 5 within the outer liner 10, such inner tube will not be susceptible to pinching and will require less frequent repair and replacement than that experienced by inner tubes in conventional tube-type tires.

It is contemplated that the pneumatic sealing ring 40 including the inner tube 5, outer liner 10 and optional shield 20 will be sold as a unit (e.g., in kit form) to enable a retrofit of the main tire section 3 in the shop to produce a tire 1 having the benefits of this invention. In the alternative, the tire 1 can be sold as a finished assembly including the main tire section 3 and the sealing ring 40 mounted on the rim 30 as described above.

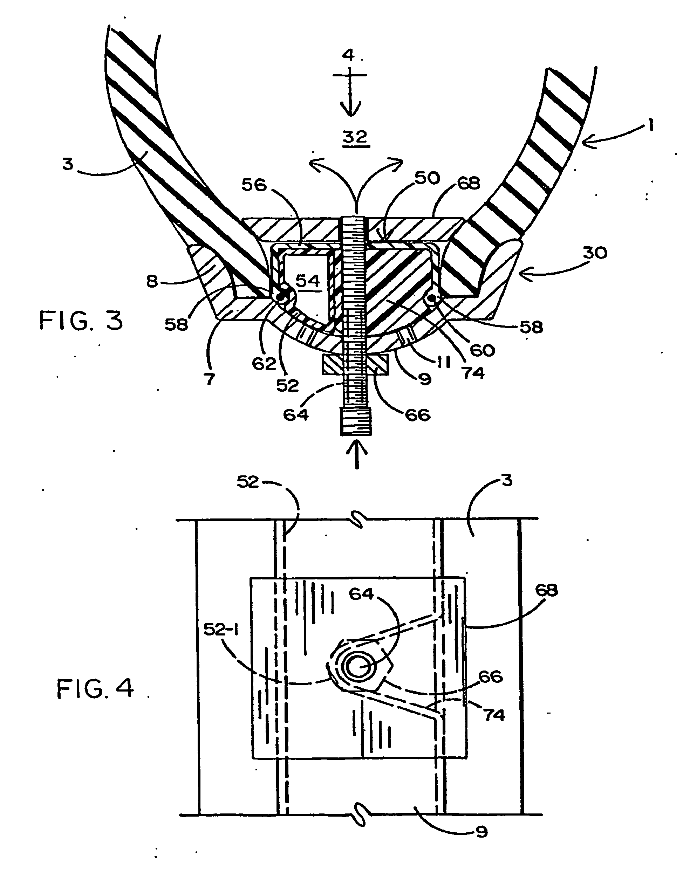

FIGs. 3 and 4 of the drawings show a pneumatic sealing ring 50 including a modification to the sealing ring 40 described above. The tube-type tire 1 and the rim 30 to which the sealing ring 50 is mated may be identical to those shown in FIGs. 1 and 2 and, therefore, identical reference numerals will be used to identify identical components. Similar to sealing ring 40, the pneumatic sealing ring 50 of FIGs. 3 and 4 includes an inflatable inner tube 52 which extends circumferentially around the beadwell 9 of rim 30 inside the main tire section 3. Like that described above, the sealing ring 50 has a relatively small volume air chamber 54 that is inflated to a relatively high pressure with respect to the relatively large volume air chamber 32 of the main tire section 3.

Also like that described above, the pneumatic sealing ring 50 includes an expandable outer liner 56 lying over and around the inner tube 52 so as to separate the inner tube 52 from the air chamber 32 of main tire section 3. As with the flexible liner 10 of the sealing ring 40 of FIG. 2, the flexible liner 56 of pneumatic sealing ring 50 includes one or more sealing O-rings 58 that are molded into the sidewalls thereof and extend outwardly therefrom. Accordingly, the O-rings 58 will be sealed against the inside of the main tire section 3 when the air chamber 54 of inner tube 52 is inflated and the outer liner 56 is correspondingly expanded so that the air chamber 32 of main tire section 3 is isolated from the rim 30. A centering lip 60, which projects downwardly from each of the opposite sidewalls of the liner 56 below the beads 62 is seated upon the beadwell 9 of rim 30 to enable the liner 56 to be self-centering in surrounding engagement with the inner tube 52.

In the embodiment of FIGs. 3 and 4, a stem (similar to that designated 36 in FIG. 2) extends through the rim 30 and the inner tube 52 to enable the air chamber 54 to be inflated. A threaded hollow rim lock bolt 64 extends through the rim 30, past the inner tube 52, and into the main tire section 3 so as to communicate with the air chamber 32 thereof and provide a passage through which air chamber 32 can be inflated. A threaded rim lock nut 66 (of FIG. 3) is rotated around one end of the threaded bolt 64 at a location outside the beadwell 9 of rim 30. A rigid (e.g., metal) rim lock plate 68 having a threaded hole through the center thereof is rotated around the opposite end of the threaded bolt 64 within the air chamber 32 of main tire section 3. Alternatively, the rim lock plate 68 can be welded around the bolt 64.

As the rim lock nut 66 is rotated around the rim lock bolt 64 and tightened down against the beadwell 9 of rim 30, the rim lock plate 68 is correspondingly pulled towards the outer liner 56 and tightened down against the main tire section 3. By virtue of the foregoing, the rim lock plate 68 is forced into locking engagement against the inside of the main tire section 3. The locking pressure of the rim lock plate 68 against the main tire section 3 advantageously prevents tire section 3 from spinning on the rim 30 as the tire 1 rides along a roadway. That is to say, it is known for the main tire section 3 to be subjected to a spinning force in response to the usual torque that is generated by the motor of a motorcycle or similar motorized vehicle on which the tire 1 has been mounted.

To enable the hollow rim lock bolt 64 to move unobstructed through the sealing ring 50 and past the inner tube 52 thereof so as to communicate with the air chamber 32 of the main tire section 3, the bolt 64 is inserted through a deflector 74. More particularly, the deflector 74 is preferably a block of rubber, or the like, that is located at one side of the inner tube 52 between the outer expandable liner 56 of sealing ring 50 and the beadwell 9 of rim 30. The deflector 74 functions to apply a pushing force against the inner tube 52 so as to compress a section 52-1 (of FIG. 4) thereof against the main tire section 3 so that the inner tube 52 will wrap around the deflector 74 so as not to interfere with the rim lock bolt 64 depending downwardly from the rim lock plate 68 and running through the sealing ring 50 at one side of the inner tube 52.

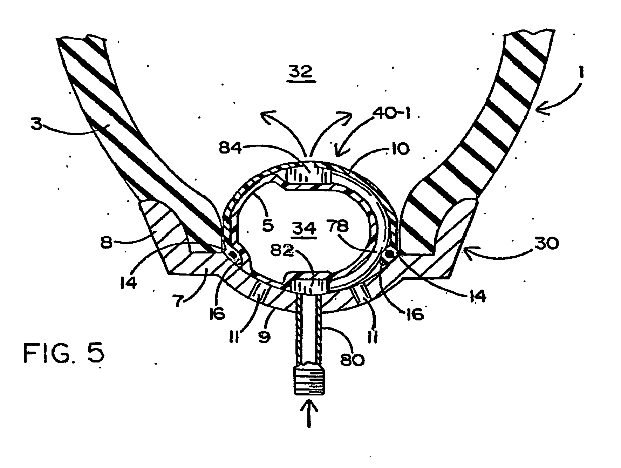

FIG. 5 of the drawings shows the tube-type tire 1 including the main tire section 3 seated on the rim 30 in the manner of FIG. 2. By way of an additional modification to the sealing ring 40, the pneumatic sealing ring 40-1 of FIG. 5 includes an air bypass hose 78. The air bypass hose 78 extends between a threaded valve stem 80 and the air chamber 32 of the main tire section 3. The air bypass hose 78 bypasses air chamber 34 and enables the air chamber 32 to be inflated. In this case, another valve stem (such as that designated 36 in FIG. 2) extends through the rim 30 to permit the air chamber 34 of inner tube 5 to be inflated.

One end of the air bypass hose 78 is connected to a valve 82 of the valve stem 80 outside inner tube 5. The opposite end of the bypass hose 78 is connected to an air port 84 that is also located outside inner tube 5 and communicates with the air chamber 32 of main tire section 3 through the expandable outer liner 10 of the sealing ring 40-1. The air port 84 is preferably bonded (e.g., vulcanized) to liner 78 to avoid a detachment. Accordingly, an air flow passage is established from the valve 82 of valve stem 80, through the air bypass hose 78, to air chamber 32 via air port 84.

The air bypass hose 78 is disposed between the inner tube 5 and the outer liner 10 of pneumatic sealing ring 40-1 so as to travel outside the inner tube 5 and around one side of the sealing ring 40-1. That is, the inner tube 5 and the outer flexible liner 10 located thereover are separated from one another by the run of the bypass hose 78 between the valve 82 of valve stem 80 and the air port 84 which communicates with air chamber 32.

## Claims

1. A tire and rim assembly for a wheel, comprising:
a tube-type tire (1) mounted on a rim (30) of a wheel, said tire including a main tire section (3) extending circumferentially around the rim of the wheel and having an air chamber (32) that is inflated with air to a first pressure,
an inner tube (5) extending circumferentially around the rim (30) of the wheel and having an air chamber (34) that is inflated with air to a second pressure, the second pressure to which the air chamber of said inner tube is inflated being greater than the first pressure to which the air chamber (32) of said main tire section (3) is inflated and wherein the volume and the size of the air chamber of said inner tube is smaller than the volume and the size of the air chamber of said main tire section such that said inner tube is incapable of providing run flat support should the tire experience a flat in response to a deflation of the air chamber of said main tire section, the air chamber of said main tire section being sealed from the air chamber of said inner tube to prevent the respective first and second pressures thereof from reaching equilibrium, and
an expandable liner (10) laying on said inner tube (5) so as to separate said inner tube from the air chamber (32) of said main tire section (3), **characterized in that** said liner (10) includes at least one sealing ring (14) extending outwardly therefrom and moving into sealing engagement with said main tire section (3) when said liner (10) is forced against said main tire section (3) in response to the air chamber (34) of said inner tube (5) being inflated with air to the second pressure
and wherein said expandable liner is manufactured from a resilient
material so as to be capable of expanding in response to the air chamber of said inner tube being inflated with air, said expandable liner having continuous flexible cords (12) running therearound to provide structural reinforcement to said liner as said liner expands in response to the air chamber of said inner tube being inflated with air.

2. The tire and rim assembly recited in Claim 1, further comprising a valve stem (36) extending through the rim (30) to the air chamber (34) of said inner tube (5) by which air is supplied to said air chamber to inflate said inner tube.

3. The tire and rim assembly recited in Claim 1, wherein said liner (10) includes a centering lip (16) projecting from each side thereof to be seated against the rim (30), whereby said liner is centered over said inner tube (5) in surrounding engagement therewith.

4. The tire and rim assembly recited in Claim 1, further comprising a shield (20) lying overtop of said liner (10) so as to establish a protective wall between the air chamber (32) of said main tire section (3) and said inner tube (5), whereby to prevent sharp objects within said air chamber from penetrating said liner and said inner tube.

5. The tire and rim assembly recited in Claim 4, further comprising a deflector (22) projecting from said shield (20) and into the air chamber (32) of said main tire section (3) whereby to deflect sharp objects within said air chamber away from said inner tube (5).

## Patentansprüche

1. Eine Reifen- und Felgenanordnung für ein Rad, die folgendes aufweist:
ein Reifen (1) der Schlauchbauart angebracht auf einer Felge (30) eines Rades, wobei der Reifen einen Hauptreifenabschnitt (3) aufweist, der sich umfangsmäßig um die Felge des Rades erstreckt und eine Luftkammer (32) besitzt, die mit Luft auf einen ersten Druck aufgeblasen ist,
ein Innenschlauch (5) der sich umfangsmäßig um die Felge (30) des Rades erstreckt und der eine Luftkammer (34) aufweist, die mit Luft auf einen zweiten Druck aufgeblasen ist, wobei der zweite Druck mit dem die Kammer des erwähnten Innenschlauchs aufgeblasen ist größer ist als der erste Druck, mit dem die Luftkammer (32) des Hauptreifenabschnitts (32) aufgeblasen ist, und wobei das Volumen und die Größe der Luftkammer des erwähnten Innenschlauchs kleiner ist als das Volumen und die Größe der Luftkammer des Hauptreifenabschnitts derart, dass der erwähnte Innenschlauch nicht in der Lage ist eine Plattlaufhalterung vorzusehen, sollte der Reifen einen platten Zustand erfahren, infolge einer Entlüftung der Luftkammer des Hauptreifenabschnitts, wobei die Luftkammer des Hauptreifenabschnitts abgedichtet ist gegenüber der Luftkammer des erwähnten Innenschlauchs, um zu verhindern, dass die entsprechenden ersten und zweiten Drücke der Reifenanordnung Gleichgewicht erreichen, und eine ausdehnbare Auskleidung (10), die auf dem Innenschlauch (5) derart liegt, um so dem Innenschlauch von der Luftkammer (32) des Hauptreifenabschnitts (3) zu trennen,
**dadurch gekennzeichnet, dass**
die erwähnte Auskleidung (10) mindestens einen Dichtring (14) aufweist, der sich nach außen davon erstreckt und sich in Dichteingriff bewegt mit dem Hauptreifenabschnitt (3) dann, wenn die erwähnte Auskleidung (10) gegen den Hauptreifenabschnitt (3) gedrückt wird, und zwar infolge des Aufgeblasenseins der Luftkammer (34) des Innenschlauches (5) mit Luft auf den zweiten Druck und wobei die erwähnte ausdehnbare Auskleidung aus einem elastischen Material derart hergestellt ist, um so in der Lage zu sein sich auszudehnen, und zwar ansprechend auf das Aufblasen der Luftkammer des Innenschlauchs mit Luft, wobei die ausdehnbare Auskleidung kontinuierlich flexible Schnüre oder Bänder (12) aufweist, die daherum verlaufen, um eine strukturelle Verstärkung für die Auskleidung vorzusehen, wenn sich die Auskleidung ausdehnt, und zwar ansprechend auf das Aufblasen zur Innenkammer des erwähnten Innenrohrs mit Luft.

2. Reifen- und Felgenanordnung nach Anspruch 1, wobei ferner ein Ventilschaft (36) vorgesehen ist, der sich durch die Felge (30) zur Luftkammer (34) des Innenschlauchs (5) erstreckt, wobei durch diesen Luft zur Luftkammer zum Aufblasen des Innenschlauchs geliefert wird.

3. Reifen- und Felgenanordnung nach Anspruch 1, wobei die Auskleidung (10) eine Zentrierlippe (16) aufweist, die sich von jeder Seite derselben erstreckt, um an der Felge (30) zu sitzen, wodurch die erwähnte Auskleidung über den Innenschlauch (5) in einem umgebenden Eingriff damit zentriert ist.

4. Reifen- und Felgenanordnung nach Anspruch 1, wobei ferner eine Abschirmung (20) vorgesehen ist, die über der Auskleidung (10) liegt, um so eine Schutzwand zwischen der Luftkammer (32) des erwähnten Hauptreifenabschnitts (3) und dem Innenschlauchs (5) vorzusehen, wodurch verhindert wird, dass scharfe Objekte innerhalb der Luftkammer die Auskleidung und den Innenschlauch durchdringen.

5. Reifen- und Felgenanordnung nach Anspruch 4, wobei ferner eine Ablenkvorrichtung bzw. ein Deflektor (22) vorgesehen ist, der von der Abschirmung (20) wegragt und in die Kammer (32) des Hauptreifenabschnitts (3) wodurch scharfe Objekte innerhalb der Luftkammer weg von dem Innenschlauch (5) abgelenkt werden.

## Revendications

1. Ensemble pneu et jante pour une roue, comprenant :
un pneu du type à chambre à air (1) monté sur une jante (30) d'une roue, le pneu comprenant une section de pneu principale (3) s'étendant de façon périphérique autour de la jante de la roue et comportant une chambre d'air (32) qui est gonflée avec de l'air à une première pression,
un tube intérieur (5) s'étendant de façon périphérique autour de la jante (30) de la roue et comportant une chambre d'air (34) qui est gonflée avec de l'air à une deuxième pression, la deuxième pression à laquelle la chambre d'air du tube intérieur est gonflée étant supérieure à la première pression à laquelle la chambre d'air (32) de la section de pneu principale (3) est gonflée, et dans lequel le volume et la taille de la chambre d'air du tube intérieur sont plus petits que le volume et la taille de la chambre d'air de la section de pneu principale, de sorte que le tube intérieur est incapable d'assurer un support de roulage à plat si le pneu venait à subir un à plat en réponse à un dégonflage de la chambre d'air de la section de pneu principale, la chambre d'air de la section de pneu principale étant étanche par rapport à la chambre d'air du tube intérieur pour empêcher que leurs première et deuxième pressions respectives ne s'équilibrent, et
un revêtement extensible (10) reposant sur le tube intérieur (5) afin de séparer le tube intérieur de la chambre d'air (32) de la section de pneu principale (3),
**caractérisé en ce que** le revêtement (10) comprend au moins une bague d'étanchéité (14) s'étendant vers l'extérieur de celui-ci et se déplaçant pour venir en contact étanche avec la section de pneu principale (3) lorsque le revêtement (10) est forcé contre la section de pneu principale (3) en réponse au fait que la chambre d'air (34) du tube intérieur (5) soit gonflée avec de l'air à la deuxième pression,
et dans lequel le revêtement extensible est fabriqué en un matériau souple de façon à pouvoir se dilater en réponse au fait que la chambre d'air du tube intérieur soit gonflée avec de l'air, le revêtement extensible comprenant de la corde flexible continue (12) passant autour pour assurer un renfort structurel du revêtement lorsque le revêtement se dilate en réponse au fait que la chambre d'air du tube intérieur soit gonflée avec de l'air.

2. Ensemble pneu et jante selon la revendication 1, comprenant en outre une tige de valve (36) s'étendant à travers la jante (30) vers la chambre d'air (34) du tube intérieur (5) par laquelle de l'air est fourni à la chambre d'air pour gonfler le tube intérieur.

3. Ensemble pneu et jante selon la revendication 1, dans lequel le revêtement (10) comprend une lèvre de centrage (16) s'étendant de chaque côté pour se tenir contre la jante (30), d'où il résulte que revêtement est centré sur le tube intérieur (5) avec un contact entourant.

4. Ensemble pneu et jante selon la revendication 1, comprenant en outre un bouclier (20) s'étendant par-dessus le revêtement (10) de façon à établir une paroi de protection entre la chambre d'air (32) de la section de pneu principale (3) et le tube intérieur (5), pour empêcher ainsi que des objets pointus se trouvant dans la chambre d'air ne pénètrent dans le revêtement et le tube intérieur.

5. Ensemble pneu et jante selon la revendication 4, comprenant en outre un déflecteur (22) s'étendant à partir du bouclier (20) jusque dans la chambre d'air (32) de la section de pneu principale (3) afin de dévier ainsi des objets pointus se trouvant dans la chambre d'air pour les écarter du tube intérieur (5).
